# EUROPEAN PATENT APPLICATION

(11) **EP 2 582 210 A1**
(43) Date of publication of application: **17.04.2013**
(21) Application number: 12187214.7
(22) Date of filing: 04.10.2012
(51) Int. Cl.: H05B 37/02

(54) **Intelligent power controlling system**

(30) Priority: 04.10.2011 TW 100135848
(71) Applicant: Unitech Electronics Co., Ltd, New Taipei City 231 (TW)
(72) Inventor: Sher, Shang-Fang, 231 Xindian Dist., New Taipei City (TW); Liao, Chun-Kai, 231 Xindian Dist., New Taipei City (TW)
(74) Representative: 2K Patentanwälte Blasberg Kewitz & Reichel

(57) **Abstract**

An intelligent power controlling system includes a gateway controller (1) and at least a socket module (2). The gateway controller (1) is configured to wirelessly control power statuses of all socket modules (2) in an area, and to record a power status information of each socket module (2) in the area at a certain time. Therefore, the user can control the gateway controller (1) to switch the power statuses of all socket modules (2), or to send a switch command in accordance with the recorded power status information to switch the power statuses of all socket modules (2) back to the power statuses performed at the certain time. Moreover, the gateway controller (1) is configured to pre-define at least one situation mode, and to switch the power statuses of all socket modules (2) in accordance with the situation mode.

## Description

### BACKGROUND OF THE INVENTION

### Field of the Invention

The present invention relates to a power controlling system, and especially relates to a power controlling system which is configured to monitor and record power statuses of all of modules in an area to switch the power statuses of all of the modules at any time.

### Description of Prior Art

Generally speaking, the sockets in a building are essential for using various electronic devices (for examples, electric lamps, televisions, air conditioners, heating machines etc.). The electronic devices are activated because the electrical energy is supplied from the wall socket power to the electronic devices through the sockets.

Plural sockets are arranged in a building (for examples, a house or an office). The wall socket power is connected to the sockets with layouts. Therefore, various electronic devices are connected to the sockets with plugs to receive the electrical energy supplied from the wall socket power. However, there are usually many sockets in a building (so that various electronic devices can be plugged into the sockets), and there are also many switches in a building to connect to various load devices to switch the power status (conducting or cutting off (switched-off or non-conducting)) of each load device.

Therefore, the power statuses of all of the sockets and the switches are difficult to be controlled by users when there are many sockets and switches. The electrical energy is wasted if the plug of the electronic device which is not in use is not removed from the socket or the switch of the load device which is not in use is not turned off.

A power controlling system for solving above-mentioned problems shall be invented, so that the power statuses of all of the sockets and the switches in a specific area can be controlled by users far from the specific area, or can be controlled in accordance with the power statuses recorded in a specific time or recorded for a specific circumstance.

### SUMMARY OF THE INVENTION

An object of the present invention is to provide an intelligent power controlling system which is configured to monitor, record and switch (with a gateway controller) the power status and power consumption of each module in a specific area.

This problem is solved by an intelligent power controlling system according to claim 1. Further advantageous embodiments are the subject-matter of the dependent claims.

In order to achieve the object of the present invention mentioned above, the intelligent power controlling system includes a gateway controller and at least a socket module. The gateway controller is configured to wirelessly control power statuses of all socket modules in an area, and to record a power status information of each socket module in the area at a certain time. Therefore, the user can control the gateway controller to switch the power statuses of all socket modules, or to send a switch command in accordance with the recorded power status information to switch the power statuses of all socket modules back to the power statuses performed at the certain time. Moreover, the gateway controller is configured to pre-define at least one situation mode, and to switch the power statuses of all socket modules in accordance with the situation mode.

The efficiency of the present invention is to use the gateway controller to wirelessly control the power statuses of all of the modules in the area, and to monitor and record the power status and power consumption of each module at various timings. Therefore, the power statuses of all of the modules in the area can be switched (with the gateway controller) as conducting, cutting off ((switched-off or non-conducting)), or back to the power statuses recorded in a specific time.

### BRIEF DESCRIPTION OF DRAWING

Fig. 1 shows a diagram of the application of a preferred embodiment of the present invention.
Fig. 2 shows a block diagram of a preferred embodiment of the present invention.
Fig. 3 shows a block diagram of a preferred embodiment of the gateway controller of the present invention.
Fig. 4A shows a block diagram of a preferred embodiment of the socket module of the present invention.
Fig. 4B shows a block diagram of another preferred embodiment of the socket module of the present invention.
Fig. 5 shows a block diagram of a preferred embodiment of the switch module of the present invention.

### DETAILED DESCRIPTION OF THE INVENTION

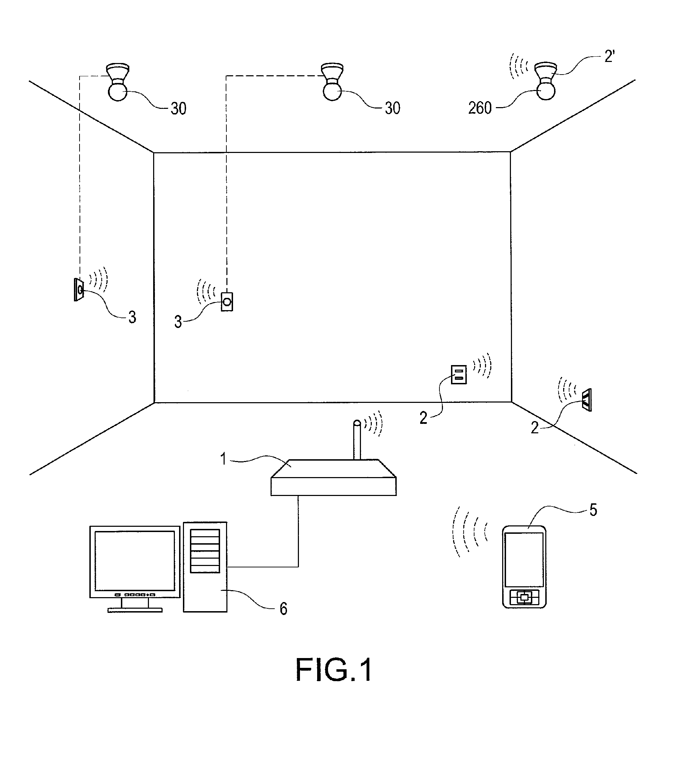

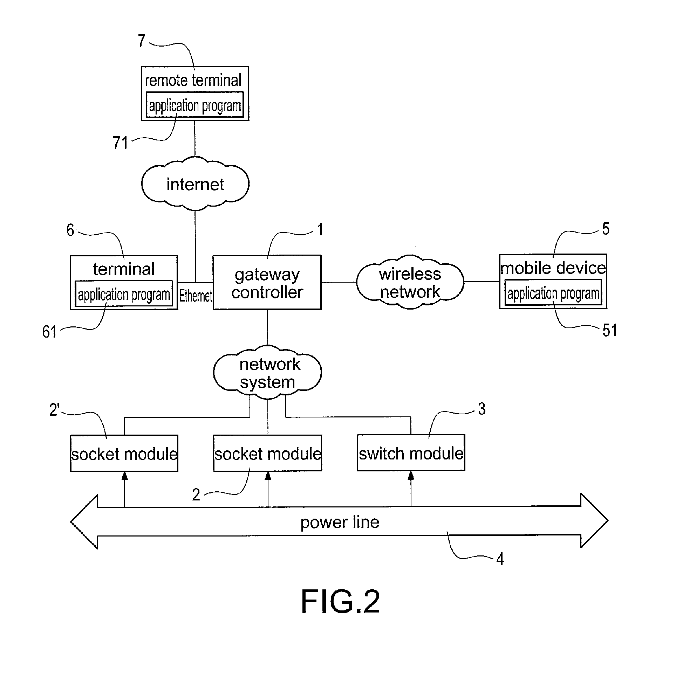

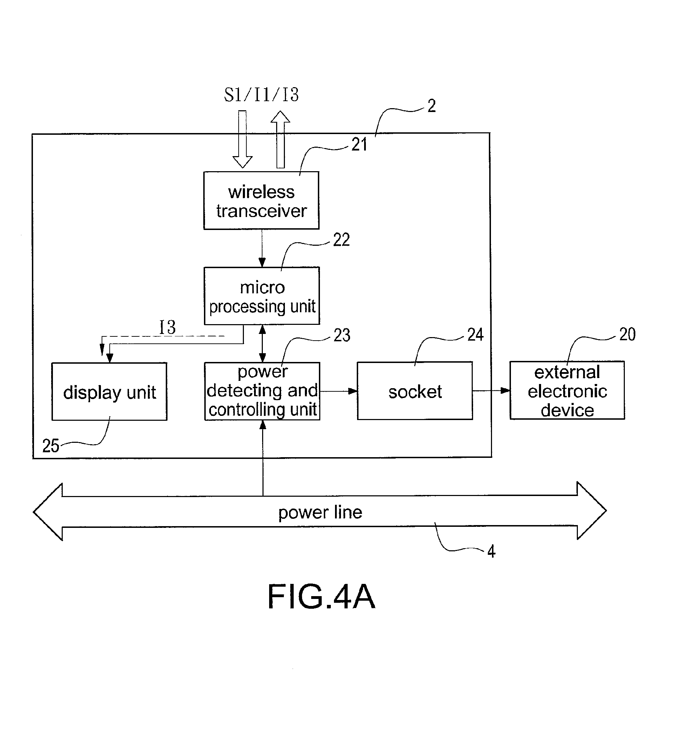

Fig. 1 shows a diagram of the application of a preferred embodiment of the present invention. Fig. 2 shows a block diagram of a preferred embodiment of the present invention. The present invention is to provide an intelligent power controlling system which mainly includes a gateway controller 1 and at least a socket module 2. Each socket module 2 is arranged in a specific area (for example, in a socket in a house) and is wirelessly electrically connected to the gateway controller 1. Each socket module 2 is electrically connected to a power line 4 (for example, a power line of the wall socket power) and an external electronic device 20 (as shown in Fig. 4A), so that the electrical energy is supplied to the external electronic device 20 through the power line 4.

In this embodiment, the gateway controller 1 is wirelessly connected to each socket module 2 with Digital Addressable Lighting Interface (DALI) protocol, so that each socket module 2 is addressed by the gateway controller 1. Therefore, the gateway controller 1 is configured to know the logical addresses of all of the socket modules 2. A command is sent from the gateway controller 1 to the socket module 2 for controlling the power status of the socket module 2. The advantage is that when the user is far from the house, the power of the socket module 2 can be cut off, so that the external electronic device 20 (for example, an electric fan, or an air conditioner etc.) connected to the socket module 2 is not activated, and the electrical energy is saved.

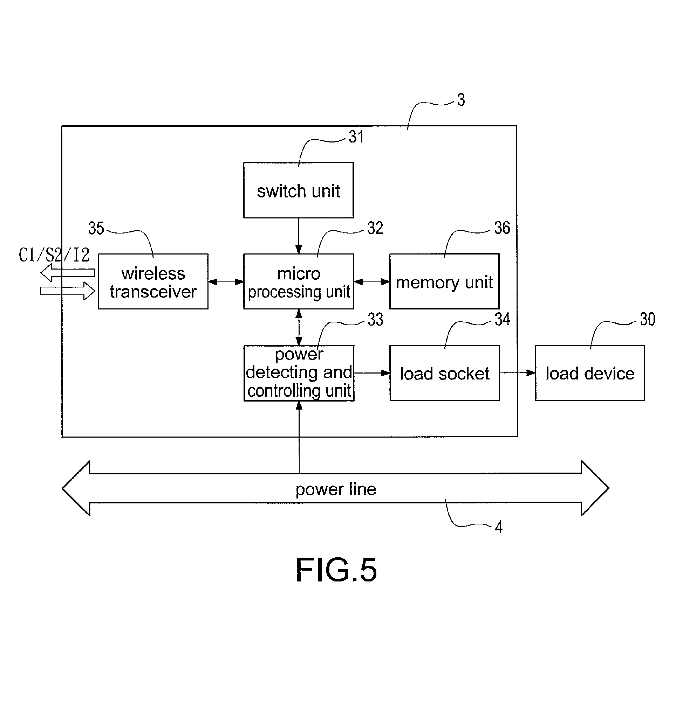

The intelligent power controlling system further includes at least a switch module 3 wirelessly connected to the gateway controller 1. The switch module 3 is electrically connected to the power line 4 and a load device 30 (for example, an electric lamp), so that the electrical energy is supplied to the load device 30 through the power line 4. The power status of the switch module 3 can be controlled with a switch unit 31 (as shown in Fig. 5) of the switch module 3 to control the load device 30 and can be wirelessly controlled with the gateway controller 1 as well. The scope of the present invention is not limited to the examples mentioned above.

In this embodiment, the gateway controller 1 is wirelessly connected to each switch module 3 with Digital Addressable Lighting Interface (DALI) protocol, so that each switch module 3 is addressed by the gateway controller 1. Therefore, the gateway controller 1 is configured to know the logical addresses of all of the switch modules 3. A command is sent from the gateway controller 1 to the switch module 3 for controlling the power status of the switch module 3. In another word, the load device 30 can be controlled with the switch unit 31 or the gateway controller 1.

The gateway controller 1 is wirelessly connected to a mobile device 5 (for example, a smart phone) through a wireless network (for example, a WIFI network). An application program 51 is installed in the mobile device 5. The power statuses of the socket module 2 and the switch module 3 can be looked up (through the gateway controller 1) by a user with the application program 51. Moreover, the total power consumption in the area can be derived in accordance with the power statuses of all of the socket modules 2 and all of the switch modules 3 in the area. The power statuses of all of the socket modules 2 and all of the switch modules 3 can be controlled by the user far from the area.

Moreover, the gateway controller 1 is electrically connected to a terminal 6 (for example, a desktop computer) with Ethernet. An application program 61 is installed in the terminal 6. The power statuses of all of the socket modules 2 and all of the switch modules 3 in the area can be monitored (through the gateway controller 1) by a user with the application program 61 of the terminal 6. Moreover, the gateway controller 1 is wirelessly connected to a remote terminal 7 with internet (through Ethernet). An application program 71 is installed in the remote terminal 7. The power statuses of all of the socket modules 2 and all of the switch modules 3 in the area can be monitored (through the gateway controller 1) by the user (who is far from the area) with the application program 61. The advantage is that even if the user is not in the house, the power statuses of all of the modules in the house can be monitored and controlled, so that the power consumption is derived and the electrical energy is not wasted.

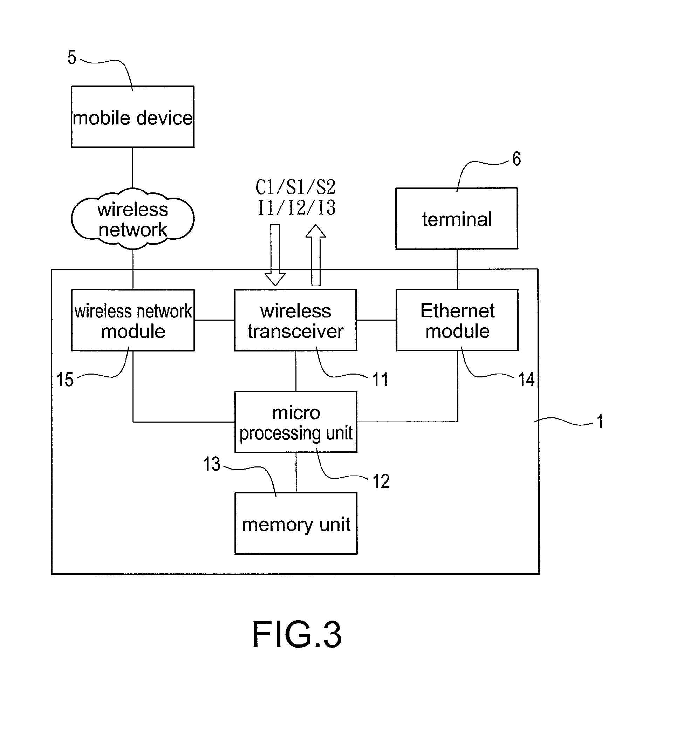

Fig. 3 shows a block diagram of a preferred embodiment of the gateway controller of the present invention. The gateway controller 1 mainly includes a wireless transceiver 11, a micro processing unit 12, a memory unit 13, an Ethernet module 14, and a wireless network module 15. The micro processing unit 12 is electrically connected to the wireless transceiver 11, the memory unit 13, the Ethernet module 14, and the wireless network module 15.

A command is sent from the mobile device 5, the terminal 6, or the remote terminal 7 to the gateway controller 1 through the Ethernet module 14 or the wireless network module 15 when the user controls the socket module 2 or the switch module 3. The command is sent to the micro processing unit 12 for processing. A first switch command S1 is generated by the micro processing unit 12 in accordance with the command and is sent from the micro processing unit 12 to the socket module 2 in the area through the wireless transceiver 11 to control the power status of the socket module 2. Moreover, a first power status information I1 is generated by the socket module 2 in accordance with the power status of the socket module 2 itself and is sent back to the gateway controller 1 to be recorded in the memory unit 13. Therefore, the gateway controller 1 can be accessed by the user through the mobile device 5, the terminal 6, or the remote terminal 7. The user can know the power status of the socket module 2 (i.e. whether the external electronic device 20 is activated or not) in accordance with the first power status information I1 recorded in the gateway controller 1.

Moreover, a control command C1 is generated (in accordance with the command) by the micro processing unit 12 if the user requires. The control command C1 is sent from the gateway controller 1 to each switch module 3 in the area through the wireless transceiver 11. The switch module 3 is required to detect the power status of the switch module 3 itself to generate a second power status information 12 to send back to the gateway controller 1 to be recorded in the memory unit 13. Therefore, the gateway controller 1 can be accessed by the user. The user can know the power statuses of all of the switch modules 3 in the area (i.e. whether each load device 30 is activated or not) in accordance with the second power status information 12 recorded in the gateway controller 1.

More particularly, at least a situation mode (not shown in Fig. 3) can be pre-recorded in the memory unit 13 of the gateway controller 1. The power status of each socket module 2 (or switch module 3) is pre-recorded in the situation mode. Therefore, the gateway controller 1 can be accessed by the user to send out the first switch command S1 to each socket module 2 in accordance with the situation mode pre-recorded in the memory unit 13, or to send out the second switch command S2 to each switch module 3 in accordance with the situation mode pre-recorded in the memory unit 13, so that the power statuses of each socket module 2 (or switch module 3) is controlled in accordance with the situation mode. For example, the situation mode can be a power-saving mode. The power statuses of all of the socket modules 2 in the area are switched to cut off when the first switch command S1 is sent from the gateway controller 1 in accordance with the power-saving mode. Therefore, the power is saving because the external electronic device 20 electrically connected to the socket module 1 is not activated. The scope of the present invention is not limited to the example mentioned above.

Fig. 4A shows a block diagram of a preferred embodiment of the socket module of the present invention. The socket module 2 mainly includes a wireless transceiver 21, a micro processing unit 22, and a power detecting and controlling unit 23. The micro processing unit 22 is electrically connected to the wireless transceiver 21 and the power detecting and controlling unit 23. The power detecting and controlling unit 23 is electrically connected to the power line 4. The power detecting and controlling unit 23 is configured to switch and detect the power status (conducting or cutting off (switched-off or non-conducting)) of the socket module 2. A first power status information I1 is generated by the micro processing unit 22 in accordance with the result detected by the power detecting and controlling unit 23. The wireless transceiver 21 is wirelessly connected to the gateway controller 1 to receive the first switch command S1 sent from the gateway controller 1. The first power status information 11 is sent out from the wireless transceiver 21.

In this embodiment, the socket module 2 further includes a socket 24 electrically connected to the power detecting and controlling unit 23. The external electronic device 20 is plugged into the socket 24 through a plug (not shown in Fig. 4A) to receive the electrical energy supplied through the power line 4.

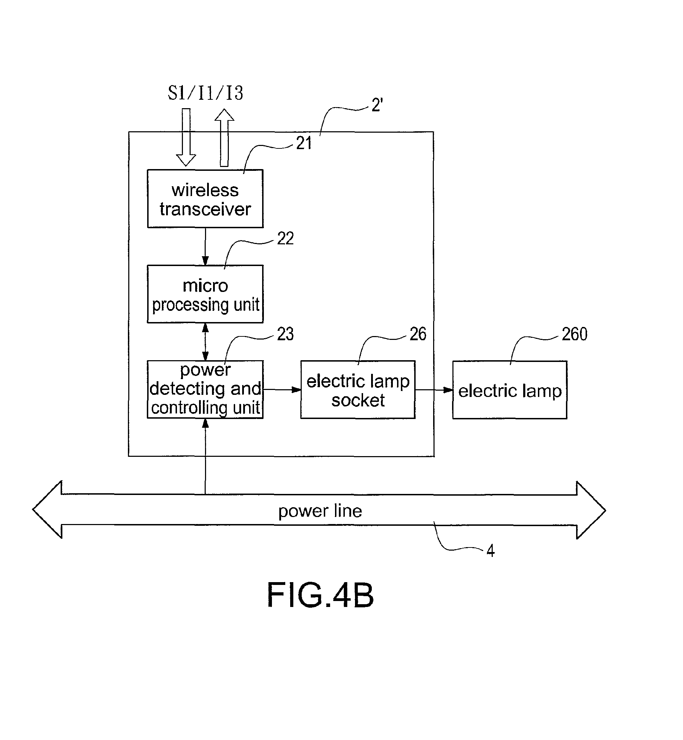

Fig. 4B shows a block diagram of another preferred embodiment of the socket module of the present invention. In this embodiment, the socket 24 is replaced by an electric lamp socket 26 electrically connected to the power detecting and controlling unit 23. Please refer to Fig. 1 and Fig. 4B. An electric lamp 260 is arranged and plugged into the electric lamp socket 26. The electric lamp 260 is lighting because the electrical energy supplied through the power line 4 is received by the electric lamp 260 through the electric lamp socket 26. In this embodiment, both the socket module 2 and the socket module 2' don't have the switch function. Therefore, the external electronic device 20 and the electric lamp 260 are controlled only by the gateway controller 1 with the first switch command S1. The first power status information I1 is generated by the socket module 2 (or the socket module 2') in accordance with the power status detected by the socket module 2 (or the socket module 2') itself. The first power status information I1 is sent to the gateway controller 1 to be recorded. The user has access to the gateway controller 1 to know the power status of the socket module 2 (or the socket module 2'), so that the user knows whether the external electronic device 20 (or the electric lamp 260) is activated or not.

More particularly, the power detecting and controlling unit 23 of the socket module 2 is configured to detect the amperage of the socket module 2 to generate an amperage information I3. The amperage information I3 is sent from the socket module 2 to the gateway controller 1 to be recorded in the memory unit 13 of the gateway controller 1. Therefore, the user can know which socket module 2 wastes power more (i.e. which external electronic device 20 connected to the socket module 2 wastes power more) in accordance with the gateway controller 1. Therefore, the user can refer to the amperage information 13 to cut off the power for the socket module 2 which wastes power more if the user wants to save power.

Moreover, the socket module 2 further includes a display unit 25 electrically connected to the micro processing unit 22. The amperage information I3 can be displayed by the socket module 2 on the display unit 25, so that the user can know the amperage of the socket module 2. Moreover, the use of electricity of the socket module 2 is calculated by the socket module 2 itself in accordance with the amperage information I3 and then the use of electricity of the socket module 2 is displayed on the display unit 25.

Fig. 5 shows a block diagram of a preferred embodiment of the switch module of the present invention. The switch module 3 includes a switch unit 31, a micro processing unit 32, a power detecting and controlling unit 33, a wireless transceiver 35, and a memory unit 36. The micro processing unit 32 is electrically connected to the switch unit 31, the power detecting and controlling unit 33, the wireless transceiver 35, and the memory unit 36. The power detecting and controlling unit 33 is electrically connected to the power line 4. The power detecting and controlling unit 33 is configured to detect whether the power status of the switch module 3 is conducting or cutting off (switched-off or non-conducting). The switch unit 31 is externally controlled by the user to control the power detecting and controlling unit 33. In another word, the switch unit 31 is controlled by the user to control the power status of the switch module 3 (i.e. to control the operation of the load device 30 connected to the switch module 3).

The second power status information I2 is generated by the micro processing unit 32 in accordance with the result detected by the power detecting and controlling unit 33. Then, the second power status information I2 is recorded in the memory unit 36. The switch module 3 is wirelessly connected to the gateway controller 1 through the wireless transceiver 35 to receive the control command C1 and the second switch command S2 sent from the gateway controller 1. The second power status information I2 generated by the switch module 3 is sent from the switch module 3 to the gateway controller 1.

The switch module 3 further includes a load socket 34 electrically connected to the power detecting and controlling unit 33. The load device 30 is plugged into the switch module 3 through the load socket 34, so that the electrical energy supplied through the power line 4 is supplied to the load device 30. As shown in Fig. 1, the load socket 34 is, for example but not limited to, an electric lamp socket. The load device 30 is, for example but not limited to, an electric lamp. The difference between the switch module 3 and the socket module 2 (or the socket module 2') is that: the power status of the switch module 3 is controlled not only by the gateway controller 1 through the mobile device 5, the terminal 6, or the remote terminal 7, but also with the switch unit 31. The socket module 2 (or the socket module 2') is only controlled by the gateway controller 1.

More particularly, the intelligent power controlling system of the present invention can include a plurality of the switch modules 3. A group includes the switch modules 3 which are in an area and are wirelessly connected to each other. The group includes at least a main switch module which is driven externally to enter a learning mode or to turn on a backup mode. Moreover, all of the switch modules 3 in the group can be chosen by the user as the main switch module. Each switch module 3 can be controlled by the main switch modules.

More specifically, the second power status information I2 sent from each switch module 3 in the group is received and recorded in the main switch unit when the main switch module is driven by the user to enter the learning mode. In another word, the control command C1 is sent from the main switch unit to each switch module 3 in the group, so that the power status of the switch module 3 is detected by the switch module 3 itself. Then, the second power status information I2 is generated and is sent to the main switch unit to be recorded in the memory unit 34 of the main switch unit.

The second switch command S2 is generated and sent from the main switch module in accordance with the second power status information I2 recorded in the main switch unit when the main switch module is driven by the user to turn on the backup mode. The power status of the switch module 3 is switched to the power status recorded in the learning mode in accordance with the second switch command S2 received by the switch module 3.

For example, the learning mode records that all of the switch modules 3 in the living room are power-off and all of the switch modules 3 in the bedroom are power-on. Then, all of the switch modules 3 in the living room will be power-off and all of the switch modules 3 in the bedroom will be power-on if receiving the second switch command S2, no matter what statuses they are before receiving the second switch command S2.

More particularly, the switch module 3 can be controlled not only with the switch unit 31 or by the main switch module, but also by the gateway controller 1. Therefore, the second power status information I2 generated by the switch module 3 is simultaneously sent from the switch module 3 to the gateway controller 1 to be recorded when the main switch module enters the learning mode. The user has access to the gateway controller 1 to turn on the backup mode, so that the power status of the switch module 3 is switched back to the power status recorded in the learning mode.

In this embodiment, the switch unit 31 is, for example, a touch switch. The switch unit 31 of the main switch module is, for example but not limited to, pressed for three times, so that the main switch module enters the learning mode or the backup mode.

In this embodiment, the switch modules 3 are electrically connected to each other with DALI protocol for addressing. Therefore, each switch module 3 knows the logical addresses of all of the switch modules 3. The control command C1, the second switch command S2, and the second power status information I2 can be transmitted (through the wireless transceiver 35) between the switch modules 3 accordingly.

More particularly, the wireless network module 15 (of the gateway controller 1), the wireless transceiver 21 (of the socket module 2), and the wireless transceiver 35 (of the switch module 3) are Zigbee transceivers which wirelessly transmit commands and information with Zigbee protocol. The commands and information (i.e. the control command C1, the first switch command S1, the second switch command S2, the first power status information I1, the second power status information I2, and the amperage information 13) transmitted from the wireless network module 15, the wireless transceiver 21, and the wireless transceiver 35 are complied with DALI protocol.

However, the wireless network module 15, the wireless transceiver 21, and the wireless transceiver 35 can be other types of wireless transmission interfaces, such as Bluetooth interface or Wi-Fi interface. Moreover, the commands and information mentioned above can be transmitted by the gateway controller 1, the socket module 2, and the switch module 3 through the power line 4 with, for example but not limited to, DALI data line or power line (Power Line Communication, PLC).

## Claims

1. An intelligent power controlling system including:
a gateway controller (1) operated by receiving commands sent from a mobile device (5), wherein the gateway controller (1) includes:
a wireless network module (15) wirelessly connected to the mobile device (5), the wireless network module (15) receiving the commands;
a micro processing unit (12) electrically connected to the wireless network module (15), the micro processing unit (12) being configured to generate a first switch command (S1) in accordance with the commands;
a wireless transceiver (11) electrically connected to the micro processing unit (12), the wireless transceiver (11) being configured to send out the first switch command and to receive a first power status information (I1) sent from outside;
a memory unit (13) electrically connected to the micro processing unit (12), the memory unit (13) recording the first power status information (I1) sent from outside; and
a plurality of socket modules (2) wirelessly connected to the gateway controller (1), the socket module (2) receiving the first switch command (S1) sent from the gateway controller (1), the socket module (2) being configured to switch the power status of the socket module (2) in accordance with the first switch command (S1) and to generate the first power status information (I1) and to send back the first power status information (I1) to the gateway controller (1).

2. The intelligent power controlling system as claimed in claim 1, wherein the gateway controller (1) further includes an Ethernet module (14) electrically connected to the micro processing unit (12), the Ethernet module (14) electrically connected to a terminal (6) with network cables to receive commands sent from the terminal (6).

3. The intelligent power controlling system as claimed in claim 1 or 2, wherein the socket module (2) includes:
a power detecting and controlling unit (23) electrically connected to a power line (4), the power detecting and controlling unit (23) being configured to detect whether the power status of the socket module (2) is conducting or cutting off, and to control the power status of the socket module (2);
a micro processing unit (22) electrically connected to the power detecting and controlling unit (23), the micro processing unit (22) being configured to generate the first power status information (I1) in accordance with result detected by the power detecting and controlling unit (23); and
a wireless transceiver (21) electrically connected to the micro processing unit (22), the wireless transceiver (21) receiving the first switch command (S1), the wireless transceiver (21) being configured to send out the first power status information (I1) of the socket module (2).

4. The intelligent power controlling system as claimed in claim 3, wherein the socket module (2) further includes a socket (24) electrically connected to the power detecting and controlling unit (23), wherein an external electronic device (20) is plugged into the socket module (2) through the socket (24) to receive the electrical energy supplied through the power line (4).

5. The intelligent power controlling system as claimed in claim 3 or 4, wherein the socket module (2') further includes an electric lamp socket (26) electrically connected to the power detecting and controlling unit (23), wherein an electric lamp (260) is plugged into the socket module (2') through the electric lamp socket (26) to receive the electrical energy supplied through the power line (4).

6. The intelligent power controlling system as claimed in any of claims 3 to 5, wherein the gateway controller (1) is wirelessly connected to each socket module (2) with digital addressable lighting interface protocol for addressing for each socket module (2); the gateway controller (1) and the socket module (2) are configured to transmit the first switch command (S1) and the first power status information (I1) with Zigbee protocol, and to transmit commands and information complying with digital addressable lighting interface protocol.

7. The intelligent power controlling system as claimed in claim 6, wherein the power detecting and controlling unit (23) is configured to detect an amperage of the socket module (2) to generate an amperage information (I3); the power detecting and controlling unit (23) is configured to send the amperage information (I3) to the gateway controller (1) for recording in the memory unit (13) of the gateway controller (1).

8. The intelligent power controlling system as claimed in claim 6 or 7, wherein the socket module (2) further includes a display unit (25) electrically connected to the micro processing unit (22); the power detecting and controlling unit (23) is configured to detect an amperage of the socket module (2) to generate an amperage information (I3) to display the amperage information (13) on the display unit (25).

9. The intelligent power controlling system as claimed in claim 8, wherein the memory unit (13) of the gateway controller (1) records at least a situation mode; the power status of each socket module (2) is pre-recorded in the situation mode; the gateway controller (1) is configured to send the first switch command (S1) to each socket module (2) in accordance with the situation mode, so that the power status of each socket module (2) is controlled in accordance with the situation mode.

10. The intelligent power controlling system as claimed in any of the preceding claims, further including a plurality of switch modules (3) wirelessly connected to the gateway controller (1), the switch module (3) receiving a control command (C1) sent from the gateway controller (1), the switch module (3) being configured to detect the power status of the switch module (3) itself, and to generate the second power status information (I2) and to send back the second power status information (I2) to the gateway controller (1) for recording, and to receive a second switch command (S2) sent from the gateway controller (1) for controlling the power status of the switch module (3).

11. The intelligent power controlling system as claimed in claim 10, wherein the switch module (3) is electrically connected to a power line (4) and a load device (30), so that the electrical energy is supplied to the load device (30) through the power line (4); the switch module (3) includes:
a power detecting and controlling unit (33) electrically connected to the power line (4), the power detecting and controlling unit (33) being configured to detect whether the power status of the switch module (3) is conducting or cutting off, and to control the power status of the switch module (3);
a switch unit (31) externally controlled to control the power detecting and controlling unit (33);
a micro processing unit (32) electrically connected to the power detecting and controlling unit (33) and the switch unit (31), the micro processing unit (32) being configured to generate the second power status information (I2) in accordance with the result detected by the power detecting and controlling unit (33);
a wireless transceiver (35) electrically connected to the micro processing unit (32), the wireless transceiver (35) receiving the control command (C1) and the second switch command (S2), the wireless transceiver (35) being configured to send out the second power status information (I2);
a memory unit (36) electrically connected to the micro processing unit (32), the memory unit (36) recording the second power status information (I2); and
a load socket (34) electrically connected to the power detecting and controlling unit (33), the switch module (3) being electrically connected to the load device (30) through the load socket (34).

12. The intelligent power controlling system as claimed in claim 11, wherein the gateway controller (1) is wirelessly connected to each switch module (3) with digital addressable lighting interface protocol for addressing for each switch module (3); the gateway controller (1) and the switch module (3) transmit the control command (C1), the second switch command (S2), and the second power status information (I2) with Zigbee protocol; the gateway controller (1) and the switch module (3) transmit commands and information complying with digital addressable lighting interface protocol.

13. The intelligent power controlling system as claimed in claim 12, wherein a group includes a plurality of the switch modules (3) wirelessly connected to each other; the group includes at least a main switch module; the main switch module is configured to receive and record the second power status information (I2) sent from all of the switch modules (3) when the main switch module is driven externally to enter a learning mode; the main switch module is configured to send the second switch command (S2) to the switch modules (3) in accordance with the second power status information (I2) recorded in the main switch module when the main switch module is driven externally to turn on a backup mode; the switch module (3) is configured to switch the power status of the switch module (3) itself back to the power status recorded in the learning mode.

14. The intelligent power controlling system as claimed in claim 13, wherein the main switch module is configured to send the control command (C1) to all of the switch modules (3) in the group when the main switch module enters the learning mode; the switch module (3) is configured to detect the power status of the switch module (3) itself, and to generate the second power status information (I2) to send back to the main switch unit.

15. The intelligent power controlling system as claimed in claim 13 or 14, wherein the switch unit (31) is a touch switch.
